# FASCICULE DE BREVET EUROPEEN

(11) **EP 2 376 504 B1**
(45) Date de publication et mention de la délivrance du brevet: **31.07.2013**
(21) Numéro de dépôt: 09768214.0
(22) Date de dépôt: 17.11.2009
(51) Int. Cl.: C07F 5/06, C09K 11/06, B01D 15/08, B01J 20/22

(54) **PROCEDE DE PREPARATION D'AZOCARBOXYLATES AROMATIQUES D'ALUMINIUM POREUX ET CRISTALLISES DE TYPE "METAL-ORGANIC FRAMEWORK"**
VERFAHREN ZUR HERSTELLUNG VON IN EINEM ORGANOMETALLISCHEN RAHMEN KRISTALLISIERTEN UND PORÖSEN AROMATISCHEN ALUMINIUMAZOCARBOXYLATEN
METHOD FOR PREPARING METAL-ORGANIC FRAMEWORK CRYSTALLISED AND POROUS ALUMINIUM AROMATIC AZOCARBOXYLATES

(30) Priorité: 18.11.2008 FR 0806448
(43) Date de publication de la demande: 19.10.2011
(73) Titulaire: Centre National de la Recherche Scientifique - CNRS, 75794 Paris Cedex 16 (FR); Université de Versailles Saint-Quentin-en-Yvelines, 78035 Versailles Cédex (FR)
(72) Inventeur: LOISEAU, Thierry, F-59700 Marcq-en-Baroeul (FR); FEREY, Gérard, F-75014 Paris (FR); VOLKRINGER, Christophe, F-67440 Thal-Marmoutier (FR); TAULELLE, Francis, F-67000 Strasbourg (FR); HAOUAS, Mohamed, F-78330 Fontenay-le-Fleury (FR)
(74) Mandataire: Novagraaf Technologies
(86) Numéro de dépôt international: PCT/FR2009/052209
(87) Numéro de publication internationale: WO 2010/058124

(56) Documents cités:
- WO-A1-2007/023119
- LOISEAU, THIERRY ET AL: "MIL-96, a Porous Aluminum Trimesate 3D Structure Constructed from a Hexagonal Network of 18-Membered Rings and .mu.3-Oxo-Centered Trinuclear Units" JOURNAL OF THE AMERICAN CHEMICAL SOCIETY , 128(31), 10223-10230 CODEN: JACSAT; ISSN: 0002-7863, 2006, XP002531103 cité dans la demande
- LEE, YONG-GON ET AL: "A comparison of the H2 sorption capacities of isostructural metal-organic frameworks with and without accessible metal sites: [{Zn2(abtc)(dmf)2}3] and [{Cu2(abtc)(dmf)2}3] versus [{Cu2(abtc)}3]" ANGEWANDTE CHEMIE, INTERNATIONAL EDITION , 47(40), 7741-7745 CODEN: ACIEF5; ISSN: 1433-7851, 2008, XP002531861
- CHEN, BANGLIN ET AL: "A triply interpenetrated microporous metal-organic framework for selective sorption of gas molecules" INORGANIC CHEMISTRY (WASHINGTON, DC, UNITED STATES) , 46(21), 8490-8492 CODEN: INOCAJ; ISSN: 0020-1669, 2007, XP002531862

## Description

### Domaine technique

La présente invention se rapporte à un procédé de préparation d'un solide MOF d'un azocarboxylate aromatique d'aluminium poreux et cristallisé, en milieu organique non aqueux.

Elle se rapporte également aux solides constitués de réseaux métal-organiques (MOF) d'azocarboxylates aromatiques d'aluminium susceptibles d'être obtenus par le procédé de l'invention ainsi que leurs utilisations pour le stockage des molécules liquides ou gazeuses, pour la séparation sélective de gaz et pour la catalyse.

Dans la description ci-dessous, les références entre crochets [] renvoient à la liste des références présentée à la fin du texte.

### Etat de la technique

Les réseaux métal-organiques ou Metal-Organic Framework en anglais (MOF) constituent une nouvelle classe de solides microporeux (voire mésoporeux pour certains d'entre eux). Elle repose sur le concept de l'assemblage tridimensionnel de ligands organiques rigides (comportant un noyau benzénique, par exemple) avec des centres métalliques. Ces derniers peuvent s'arranger pour former des clusters isolés, des chaînes infinies ou des couches inorganiques qui se connectent les uns les autres par l'intermédiaire des ligands organiques via des liaisons de type carboxylates ou amines. Plusieurs groupes Yaghi [1], Kitagawa [2] et Férey [3], ont exposé ce type de stratégie pour la formation de solides cristallisés offrant des charpentes tridimensionnelles avec des propriétés de porosités exceptionnelles (surface spécifique BET > 3000 m².g⁻¹).

Ce type de matériaux est habituellement caractérisé par leur surface spécifique (qui donne une idée précise de leur porosité accessible pour l'incorporation des molécules). Ces valeurs de surfaces spécifiques (exprimées en m² par gramme de matériau) sont mesurées par les méthodes Brunauer-Emmett-Teller (ou BET) qui permet d'examiner la surface des pores par chimie-sorption de l'azote à 77 K (modèle multicouche) ou Langmuir qui utilise le même procédé avec un modèle monocouche. Ces nouveaux matériaux s'avèrent être de très bons adsorbants pour les gaz tels que l'hydrogène [4-6], le méthane [7, 8] ou encore le dioxyde de carbone [8]. Ils peuvent donc être utilisés en remplacement des charbons actifs ou encore des zéolithes. De plus, ce type de solides (dont certains d'entre eux sont biocompatibles) peut trouver des applications pour l'encapsulation et le relargage contrôlé de molécules médicamenteuses [9].

D'un point de vue de la valorisation industrielle, plusieurs groupes de recherche se sont particulièrement intéressés à cette nouvelle classe émergente de matériaux poreux. En effet, la compagnie allemande BASF (Ludwigshafen, Allemagne) et le groupe de Yaghi (UCLA, USA) ont développé les procédés de synthèse et la mise en forme de nouveaux solides essentiellement à base d'éléments divalents (1^{ère} série des métaux de transition, alcalino-terreux) ou trivalents (terres rares) combinant des ligands organiques (principalement des carboxylates aromatiques) [10, 11]. Des procédés de préparation de solides incorporant des métaux comme par exemple l'aluminium et le zinc et des ligands organiques comme par exemple l'acide téréphtalique, l'acide trimésique, l'acide 2,6-naphathalènedicarboxylique ont également été décrits [12, 13].

Depuis plus d'une dizaine d'année, le groupe de Gérard Férey (Versailles) s'est intéressé à la synthèse et la caractérisation de solides poreux de type Metal-Organic Framework (MOF) en développant plusieurs axes de recherches [3], notamment la synthèse de solides MOF incorporant de l'aluminium. En particulier, la synthèse de carboxylates d'aluminium poreux cristallisés comme par exemple le téréphathalate d'aluminium MIL-53 [14], le naphthalate d'aluminium MIL-69 [15] et les trimésates d'aluminium MIL-96 [16] et MIL-110 [17] ont été décrites. MIL-n signifie Matériaux de l'Institut Lavoisier. Certains de ces solides possèdent des capacités d'adsorption des gaz (H₂, CO₂, CH₄) très intéressantes [5, 8].

Il est à noter que deux autres matériaux de la série, le téréphthalate de zinc MOF-5 [18] et le trimésate de cuivre HKUST-1 [19] ont également été décrits. Un solide MOF, d'un azocarboxylate, à base de zinc ou cuivre a été décrit [27].

D'autres matériaux ont été obtenus avec l'acide téréphtalique dans d'autres conditions de synthèse ou d'autres ligands (par exemple l'acide trimésique, l'acide 1,4-naphthalènedicarboxylique, l'acide 1,2,4,5-benzènetétracarboxylique) [20]. La synthèse de carboxylates d'aluminium avec l'acide trimésique en présence de solvant DMF (N,N'-diméthylformamide) [21], avec l'acide fumarique [22] ou encore des carboxylates mixtes aluminium avec un autre métal (par exemple Ti, Mg, La, Mo) [23]. Enfin, un brevet norvégien de l'université d'Oslo [24] fait également état de la préparation de solides de type MIL-53 à partir de l'acide téréphthalique fonctionnalisé avec des groupements amino (-NH₂).

Parmi les différentes familles de composés étudiés, celle incorporant de l'aluminium est plus particulièrement recherchée par les industriels du fait du faible coût à la production de ce type de matériaux. De plus, en tant qu'élément léger, les matériaux à base d'aluminium peuvent présenter de grandes capacités de stockages de molécules telles que H₂, CH₄, CO₂, etc.

A ce jour, parmi les procédés connus pour la préparation des MOF, en particulier des MOF à base d'aluminium, aucun ne décrit la préparation des matériaux MOF à base de ligands azocarboxylates d'aluminium. La structure de ces matériaux et la topologie des éléments les constituants n'ont pas non plus été étudiées dans l'art antérieur.

Or, de manière surprenante les MOF à base d'azocarboxylates d'aluminium, sous une forme cristallisée, se sont révélés particulièrement intéressants en termes de porosité et de pureté.

D'une manière générale, il est difficile de contrôler l'organisation structurale et la porosité des matériaux MOF. Ceci peut être liée par exemple aux risques d'interpénétration et d'enchevêtrement des réseaux au cours de la formation de ces matériaux pouvant conduire à un matériau dense avec des pores réduits. Le matériau obtenu pourra donc avoir une structure hétérogène avec une porosité inadaptée.

Il est donc intéressant de pouvoir préparer des MOF à base d'azocarboxylates d'aluminium pour lesquels les structures peuvent être contrôlées de façon à obtenir des propriétés spécifiques notamment une structure cristallisée, un diamètre de pores « sur mesure », adaptée aux molécules à adsorber, une surface spécifique et/ou une capacité d'adsorption améliorée, etc.

Par ailleurs, les solides MOF à base d'aluminium obtenus par la plupart des procédés connus peuvent être non adaptés à l'application souhaitée car ils peuvent comprendre plusieurs phases, être sous forme amorphe ou encore contenir des substances secondaires indésirables obtenues et non éliminées lors de la préparation du solide MOF. De plus, lesdits solides ne présentent pas toujours une porosité et donc une capacité d'adsorption suffisante.

A ce jour, il n'existe pas de procédés de préparation de MOF d'azocarboxylates d'aluminium qui puissent conduire avec de bon rendement à des azocarboxylates d'aluminium de type MOF avec les propriétés de pureté, de porosité et de cristallinité requises.

Il existe donc un réel besoin d'un procédé de préparation d'azocarboxylates d'aluminium de type réseaux métal-organiques ou MOF (Metal-Organic Framework en anglais) qui soit reproductible, et industriellement réalisable.

De plus, il existe un besoin réel de disposer d'un procédé de préparation d'azocarboxylates d'aluminium de type réseaux métal-organiques ou MOF qui, sans recourir à des étapes supplémentaires notamment de purification et/ou de cristallisation, puissent conduire à un solide MOF cristallisé, constitué d'une seule phase, d'une grande pureté (débarrassé de tout produit secondaire) et présentant une porosité suffisante et adaptée à l'utilisation à laquelle le MOF sera destinée.

### Description de l'invention

La présente invention a précisément pour but de répondre à ce besoin en fournissant un procédé de préparation d'un solide MOF d'un azocarboxylate aromatique d'aluminium poreux et cristallisé, comprenant au moins les étapes suivantes :
(i) on mélange dans un solvant organique non aqueux :
   - au moins un précurseur inorganique métallique se présentant sous la forme de métal Al, d'un sel de métal Al³⁺ ou d'un complexe de coordination comprenant l'ion métallique Al³⁺ ; et
   - au moins un précurseur organique du ligand L, L étant un ligand azodi-, azotri-, azotétra-carboxylate aromatique de formule R⁰R¹N₂(COO⁻) q où R⁰ et R¹ représentent, indépendemment l'un de l'autre,
      - un radical aryle mono- ou poly-cyclique, fusionné ou non, comprenant de 6 à 50 atomes de carbone, par exemple de 6 à 27 atomes de carbone,
      - un radical hétéroaryle mono- ou poly-cyclique, fusionné ou non, comprenant de 4 à 50 atomes de carbone, par exemple de 4 à 20 atomes de carbone,
         le radical R⁰ étant éventuellement substitué par un ou plusieurs groupes indépendamment choisis dans le groupe comprenant C₁₋₁₀alkyle, C₂₋₁₀alcène, C₂₋₁₀alcyne, C₃₋₁₀cycloalkyle, C₁₋₁₀hétéroalkyle, C₁₋₁₀haloalkyle, C₆₋₁₀aryle, C₃₋₂₀hétérocyclique, C₁₋₁₀alkylC₆₋₁₀aryle, C₁₋₁₀alkylC₅₋₁₀hétéroaryle, F, CI, Br, I, -NO₂, -CN, -CF₃, -CH₂CF₃, -OH, -CH₂OH, -CH₂CH₂OH, -NH₂, -CH₂NH₂, -NHCHO, -COOH, -CONH₂, -SO₃H, -PO₃H₂,
      - q = 2 à 4 ;
(ii) on chauffe le mélange obtenu en (i) à une température d'au moins 50°C de manière à obtenir ledit solide.

Dans le cadre de la présente invention les termes « solide cristallisé » et « solide cristallin » peuvent être employés indifféremment pour désigner un solide dans lequel les atomes, les ions ou les molécules forment des arrangements ordonnés à longue distance dans les trois dimensions de l'espace, conduisant à une signature unique constituée par une succession spécifique de pics de diffraction (rayons X par exemple) pour chaque solide.

Un « solide amorphe » est un solide où les atomes, les ions ou les molécules, bien qu'ordonnés localement, s'empilent de façon désordonnée à longue distance. Il en résulte une signature d'un ou plusieurs pics de diffraction (rayons X par exemple) très larges qui ne permet pas l'identification précise du matériau (puisque plusieurs solides peuvent co-exister et conduire à la même signature par diffraction).

Dans de nombreux solides, les atomes, les ions ou les molécules peuvent adopter plusieurs arrangements selon les conditions de leur formation. Ces agencements différents constitutent les différentes « phases » du solide existantes dans un système chimique donné. Les propriétés physiques comme le point de fusion et la densité des différentes phases se distinguent, ce qui permet la différenciation des solides.

On entend par « alkyle » au sens de la présente invention, un radical carboné linéaire ou ramifié saturé éventuellement substitué, comprenant 1 à 12 atomes de carbone, par exemple 1 à 10 atomes de carbone, par exemple 1 à 8 atomes de carbone, par exemple 1 à 6 atomes de carbone. Par exemple, un radical alkyle peut-être un radical méthyle, éthyle, n-propyle, isopropyle, n-butyle, sec-butyle, isobutyle, tert-butyle, n-pentyle, sec-pentyle, isopentyle, tert-pentyle, n-hexyle, sec-hexyle ou radicaux similaires.

On entend par « alcène » au sens de la présente invention, un radical hydrocarbure insaturé linéaire ou ramifé, cyclique ou acyclique, comprenant au moins une double liaison carbone-carbone. Le radical alcényle peut comprendre de 2 à 20 atomes de carbone, par exemple de 2 à 10 atomes de carbone, plus particulièrement de 2 à 8 atomes de carbone, encore plus particulièrement de 2 à 6 atomes de carbone. Par exemple, un radical alcényle peut-être un radical allyle, éthenyle, propenyle, butenyle, 1-méthyl-2-buten-1-yle ou radicaux similaires.

Le terme "alcyne" désigne un radical hydrocarbure insaturé linéaire ou ramifé, cyclique ou acyclique, comprenant au moins une triple liaison carbone-carbone. Le radical alcynyle peut comprendre de 2 à 20 atomes de carbone, de préférence de 2 à 10 atomes de carbone, plus particulièrement de 1 à 8 atomes de carbone, encore plus particulièrement de 2 à 6 atomes de carbone. Par exemple, un radical alcynyle peut-être un radical éthynyle, 2-propynyle (propargyle), 1-propynyle ou radicaux similaires.

On entend par « aryle » au sens de la présente invention, un système aromatique comprenant au moins un cycle satisfaisant la règle d'aromaticité de Hückel. Ledit aryle est éventuellement substitué et peut comprendre de 6 à 50 atomes de carbone, par exemple 6 à 27 atomes de carbone, notamment de 6 à 14 atomes de carbone, plus particulièrement de 6 à 12 atomes de carbone. Par exemple, un radical aryle peut être un groupe phényle, naphthyle, tétrahydronaphthyle, indanyle, indényle ou radicaux similaires.

On entend par « hétéroaryle » au sens de la présente invention, un système comprenant au moins un cycle aromatique de 4 à 50 atomes de carbone, par exemple de 4 à 20 atomes de carbone, et au moins un hétéroatome choisi dans le groupe comprenant notamment le soufre, l'oxygène, l'azote. Ledit hétéroaryle peut être substitué. Par exemple, un radical hétéroaryle peut être un radical pyridyle, pyrazinyle, pyrimidinyle, pyrrolyle, pyrazolyle, imidazolyle, thiazolyle, oxazolyle, isooxazolyle, thiadiazolyle, oxadiazolyle, thiophenyle, furanyle, quinolinyle, isoquinolinyle, et radicaux similaires.

On entend par « cycloalkyle » au sens de la présente invention, un radical carboné cyclique, saturé ou insaturé, éventuellement substitué, qui peut comprendre 3 à 10 atomes de carbone. On peut citer par exemple le cyclopropyl, le cyclobutyle, le cyclopentyle, le cyclohexyle, le cycloheptyle, le cyclooctyle, le 2-methylcyclobutyle, le 2,3-dimethyl-cyclobutyle, le 4-methylcyclobutyle, le 3-cyclopentylpropyle.

On entend par « haloalkyle » au sens de la présente invention, un radical alkyle tel que défini précédemment, ledit système alkyle comprenant au moins un halogène choisi dans le groupe comprenant le fluor, le chlore, le brome, l'iode.

On entend par « hétéroalkyle » au sens de la présente invention, un radical alkyle tel que défini précédemment, ledit système alkyle comprenant au moins un hétéroatome, notamment choisi dans le groupe comprenant le soufre, l'oxygène, l'azote, le phosphore.

On entend par « hétérocycle » au sens de la présente invention, un radical carboné cyclique comprenant au moins un hétéroatome, saturé ou insaturé, éventuellement substitué, et qui peut comprendre 3 à 20 atomes de carbone, de préférence 5 à 20 atomes de carbone, de préférence 5 à 10 atomes de carbone. L'hétéroatome peut être par exemple choisi dans le groupe comprenant le soufre, l'oxygène, l'azote le phosphore. Par exemple, un radical hétérocyclique peut être un groupe pyrrolidinyle, pyrazolinyle, pyrazolidinyle, imidazolinyle, imidazolidinyle, piperidinyle, piperazinyle, oxazolidinyle, isoxazolidinyle, morpholinyle, thiazolidinyle, isothiazolidinyle, ou tetrahydrofuryle.

On entend par « alkoxy », « aryloxy », « hétéroalkoxy » et « hétéroaryloxy » au sens de la présente invention, respectivement un radical alkyle, aryle, hétéroalkyle et hétéroaryle liés à un atome d'oxygène. Par exemple, un radical alcoxy peut être un radical méthoxy, éthoxy, propoxy, isopropoxy, n-butoxy, tert-butoxy, neopentoxy, n-hexoxy, ou un radical similaire.

Le terme « substitué » désigne par exemple le remplacement d'un atome d'hydrogène dans une structure donnée par un groupe tel que défini précédemment. Lorsque plus d'une position peut être substituée, les substituants peuvent être les mêmes ou différents à chaque position.

Dans le contexte de l'invention, le solvant organique peut être constitué d'un seul solvant ou d'un mélange de solvants organique(s).

Le terme « solvant non aqueux » se réfère avantageusement à un ou un mélange de solvant(s) contenant au maximum 5 % en poids, de préférence 1 % en poids, plus préférentiellement 0,1 % en poids et encore plus préférentiellement au maximum 0,01 % en poids d'eau par rapport au poids total de tous les solvants.

Le solvant organique non aqueux peut être choisi dans le groupe comprenant le N,N-diméthylformamide (DMF), le N,N-diéthylformamide (DEF), le dioxane, le méthanol, l'éthanol, le n-propanol, l'isopropanol, le n-butanol, l'isobutanol, tert-butanol, le cyclohexanol, la pyridine, le toluène, l'acétate d'éthyle, le diméthyle sulfoxide (DMSO).

Le solvant organique non aqueux est plus particulièrement choisi dans le groupe comprenant le DMF, le DEF, le dioxane, le méthanol, l'éthanol, le DMSO.

Le précurseur inorganique métallique dans l'étape (i) peut se présenter sous la forme de métal Al, d'un sel de métal Al³⁺ ou d'un complexe de coordination comprenant l'ion métallique Al³⁺. Lorsqu'il s'agit de sel de métal , le contre ion peut être un ion inorganique choisi dans le groupe comprenant le sulfate, le nitrate, le nitrite, le sulfite, le bisulfite, le phosphate, le phosphite, le fluorure, le chlorure, le bromure, l'iodure, le perchlorate, le carbonate, le bicarbonate. Le contre ion peut également être un ion organique choisi dans le groupe comprenant les acétates, les formates, les oxalates, citrates, éthoxy, isoproxy. De préférence, le précurseur inorganique métallique se présente sous forme d'un sel de métal Al³⁺.

L'organisation spatiale cristalline des solides de la présente invention est à la base des caractéristiques et propriétés particulières de ces matériaux. Elle régit notamment la taille des pores, qui a une influence sur la surface spécifique des matériaux et sur les caractéristiques d'adsorption. Elle régit également la densité des matériaux qui relativement faible, la proportion de métal dans ces matériaux, la stabilité des matériaux, la rigidité et la flexibilité des structures, etc.

En outre, la taille des pores peut être ajustée par le choix de ligands L appropriés. Dans le procédé de l'invention, le ligand L est plus particulièrement un azodi- ou azotétra-carboxylique aromatique, choisi dans le groupe comprenant :
C₁₂H₈N₂(CO₂⁻)₂ (4,4'-azobenzène dicarboxylate),
C₁₂H₆Cl₂N₂(CO₂⁻)₂ (dichloro-4,4'-azobenzène dicarboxylate),
C₁₂H₆N₂(CO₂⁻)₄ (3,3',5,5'-azobenzène tétracarboxylate),
C₁₂H₆N₂(OH)₂(CO₂⁻)₂ (dihydroxo-4,4'-azobenzène dicarboxylate).

Dans l'étape (i) le précurseur inorganique métallique et le précurseur organique du ligand L peuvent être mélangés dans un rapport molaire compris entre 1 et 5.

Comme déjà indiqué, les solides MOF selon l'invention possèdent une structure cristallisée qui procure à ces matériaux des propriétés spécifiques. Dans le procédé selon l'invention, la cristallisation se fait dans un domaine de température bien précise. Ainsi, dans l'étape (ii), on chauffe le mélange à une température allant de 50°C à 150 °C. Le mélange peut être chauffé pendant 1 à 10 jours. Un jour correspond à 24 heures. Le mélange peut être chauffé dans une cellule close.

L'étape (ii) peut être réalisée à une pression autogène supérieure à 10⁵ Pa. Une pression « autogène » correspond à la pression générée par les réactifs à une température donnée dans une cellule de réaction close.

Le solide obtenu à l'issue de l'étape (ii) peut, en outre, être soumis à une étape d'activation (iii) dans laquelle ledit solide est chauffé à une température comprise de 100°C à 300°C, de préférence de 100°C à 200°C. Dans cette étape, le solide peut être chauffé pendant 1 à 48 heures.

L'étape d'activation (iii) peut éventuellement se faire dans un mélange de solvant(s) choisi(s) dans le groupe comprenant le DMF, le DEF, le méthanol, l'éthanol, le DMSO ou l'eau.

Cette étape d'activation (iii) permet notamment de vider les pores du solide MOF de l'invention et de les rendre accessibles pour l'utilisation envisagée dudit solide. Le vidage peut se faire, par exemple, par le départ des molécules d'eau, de solvant et/ou le cas échéant des molécules de ligands L présents dans le milieu réactionnel. Les solides MOF résultant possèderont alors une plus forte capacité d'adsorption et de stockage.

La présente invention a également pour objet un solide MOF d'un azocarboxylate aromatique d'aluminium poreux et cristallisé susceptible d'être obtenu par le procédé selon l'invention, comprenant une succession tridimensionnelle de motifs de formule (I):

AlₘOₖX₁Lₚ (I)

dans laquelle :
□ Al représente l'ion métallique Al³⁺ ;
□ m est 1 à 15, par exemple 1 à 8 ;
□ k est 0 à 15, par exemple 1 à 8 ;
□ l est 0 à 10, par exemple 1 à 8 ;
□ p est 1 à 10, par exemple 1 à 5 ;
m, k, l est p sont choisis de façon à respecter la neutralité des charges dudit motif ;
□ X est un anion choisi dans le groupe comprenant OH⁻, Cl⁻, F⁻, I⁻, Br⁻, SO₄²⁻, NO₃⁻, ClO₄⁻, PF₆⁻, BF₃⁻, R²-(COO⁻)ₙ, R²-(SO₃⁻)ₙ, R²-(PO₃⁻)ₙ, où R² est un hydrogène, un alkyle en C₁ à C₁₂, linéaire ou ramifié, éventuellement substitué, n = 1 à 4 ;
□ L est un ligand tel que défini précédemment.

Les solides MOF d'azocarboxylates aromatiques d'aluminium préparés par le procédé de l'invention présentent certains avantages notamment :
- il s'agit de solides cristallisés,
- avec une grande pureté (aucun produit secondaire comme par exemple l'hydroxyle d'aluminium n'est détecté), et
- présentant une porosité significative (surface de Langmuir jusqu'à 3500 m²/g) permettant de contrôler notamment les caractéristiques d'adsorption de certaines molécules.

De préférence, X est choisi dans le groupe comprenant OH⁻, Cl⁻, F⁻, ClO₄⁻.

Les solides MOF selon l'invention comprennent de préférence un pourcentage massique d'Al de 5 à 50%.

Les solides MOF susceptibles d'être obtenus par le procédé de l'invention possèdent des pores, et plus particulièrement des micro- et/ou des mésopores. Les micropores peuvent être définis comme des pores ayant un diamètre inférieur ou égal à 2 nm (diamètre ≤ 2nm) et les mésopores comme des pores ayant un diamètre supérieur à 2 nm et pouvant aller jusqu'à 50 nm (2nm < diamètre < 50nm). De préférence, le diamètre des pores du solide MOF de l'invention est de 0,2 à 6 nm. La présence des micro- et mésopores peuvent être suivie par des mesures de sorption pour déterminer la capacité du solide MOF à absorber l'azote à 77K selon DIN 66131.

La surface spécifique des solides constitués de réseaux métal-organiques (MOF) d'azocarboxylates aromatiques d'aluminium poreux et cristallisé susceptibles d'être obtenus par le procédé de l'invention peut être mesurée par la méthode BET et déterminée et calculée par le modèle Langmuir. Lesdits solides peuvent présenter une surface spécifique BET allant de 50 à 4200 m²/g, plus particulièrement de 100 à 3000 m²/g. Ils peuvent également présenter une surface spécifique Langmuir allant de 50 à 6000 m²/g, plus particulièrement de 150 à 3500 m²/g.

Les solides MOF selon l'invention présentent avantageusement un volume poreux de à 0,3 à 4 cm³/g. Dans le cadre de l'invention, le volume poreux signifie le volume accessible pour les molécules de gaz ou de liquide.

Dans le cadre de la présente invention, les solides MOF peuvent avoir une capacité de charge en gaz de 0,5 à 50 mmol de gaz par gramme de solide sec. La capacité de charge signifie la capacité de stockage de gaz ou la quantité de gaz adsorbé par le solide. Ces valeurs et cette définition s'applique également à la capacité de charge en liquide.

Les solides MOF de la présente invention peuvent présenter notamment l'avantage d'avoir une stabilité thermique jusqu'à une température de 500°C. Plus particulièrement, ces solides peuvent présenter une stabilité thermique entre 250°C et 450°C.

Les solides MOF de l'invention sont cristallisés et peuvent être, de préférence, sous forme de cristallites avec une longueur qui varie de 0,05 µm à 100 µm, plus particulièrement de 0,05 µm à 20 µm. Ils se présentent de préférence, sous formes de petits cristaux présentant une morphologie particulière (aiguilles, plaquettes, octaèdres...) qui permet aussi leur identification précise par examen à l'aide d'un microscope électronique à balayage (MEB).

Comme déjà indiqué, les solides MOF selon l'invention possèdent une structure cristallisée et une grande pureté qui procurent à ces matériaux des propriétés spécifiques.

Contrairement aux solides connus, les solides MOF d'azocarboxylates d'aluminium selon l'invention sont constitués d'une seule phase. Cela signifie que les autres phases pouvant exister dans le système chimique considéré ne sont pas présentes en mélange avec le solide.

Les solides MOF d'azocarboxylates d'aluminium susceptibes d'être obtenus par un procédé de préparation tel que décrit précédemment présentant, en outre, un degré de pureté d'au moins 95%, en particulier d'au moins 98 % en masse. La pureté des solides MOF de l'invention peut être déterminée notamment par analyse chimique élémentaire, diffraction des rayons X, microscopie éléctronique à balayage. De ce fait, les solides MOF obtenus, ne comportent pas ou peu de produit secondaire comme par exemple l'hydroxyde d'aluminium de formule Al(OH)₃ ou AlO(OH) ou encore les autres phases du système chimique considéré apparaissant dans d'autres conditions de synthèse.

Les caractéristiques structurales particulières des solides de la présente invention, en font des adsorbants de grande capacité de charge, de grande sélectivité et de grande pureté. Ils rendent donc possible l'adsorption sélective et donc la séparation sélective de molécules de gaz comme par exemple des molécules de NO, N₂, H₂S, H₂, CH₄, O₂, CO, CO₂...).

La présente invention a également pour objet, l'utilisation d'un solide constitué de réseau métal-organique (MOF) d'azocarboxylates d'aluminium poreux et cristallisés pour le stockage des molécules liquides ou gazeuses, pour la séparation sélective de gaz [25] ou encore pour la catalyse [26].

D'autres avantages pourront encore apparaître à l'homme du métier à la lecture des exemples ci-dessous, illustrés par les figures annexées, donnés à titre illustratif.

### Brève description des figures

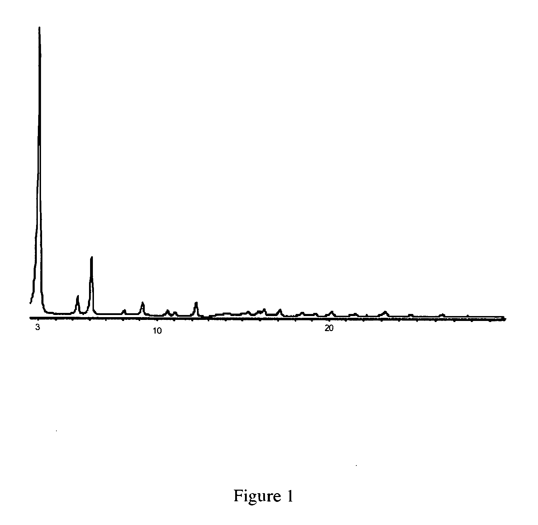

□ La figure 1 représente le diagramme de diffraction RX de la phase MIL-130 (Al) (CuK_{□}). L'abscisse représente la variation angulaire en 2□(°). L'ordonné représente l'intensité relative des pics de diffraction.

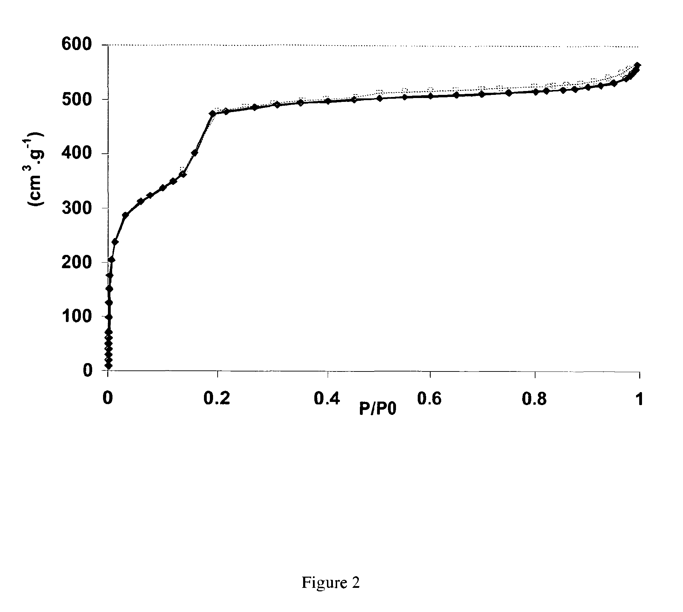

□ La figure 2 représente l'isotherme d'adsorption N₂ à 77K de la phase MIL-130. Le rapport p/p⁰ qui correspond à la pression relative est donné en abscisse. Le volume de gaz adsorbé par gramme de produit (cm³.g⁻¹) est représenté en ordonné.

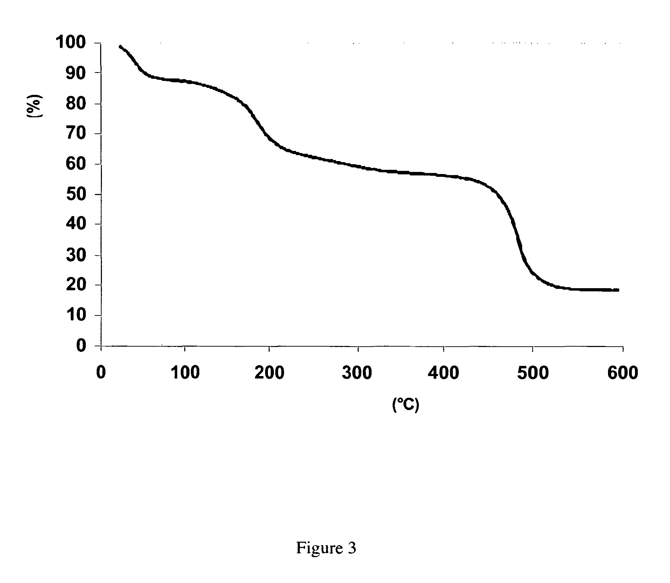

□ La figure 3 représente la courbe de l'analyse thermogravimétrique de MIL-130 (Al) (sous flux d'O₂, 3°C.min⁻¹). Le pourcentage de la perte de masse est représenté en ordonné. La vatempérature de chauffage est représentée en abscisse.

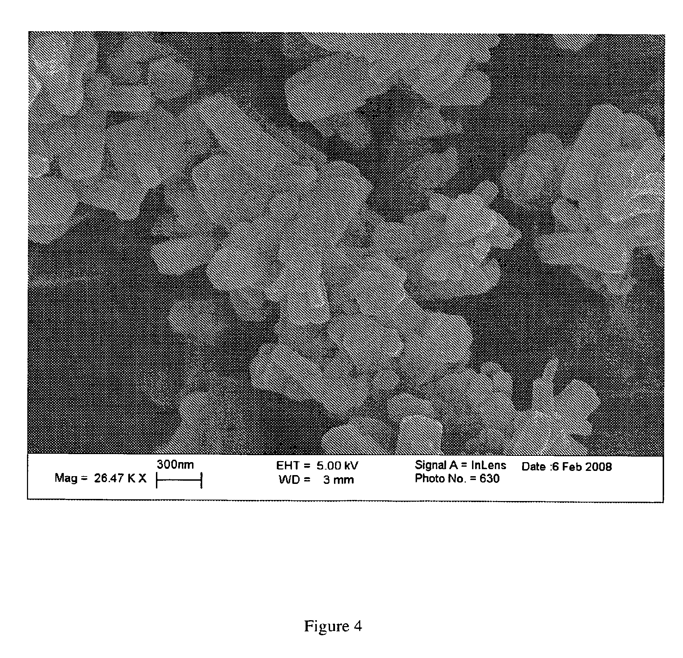

□ La figure 4 représente la photographie (microscopie électronique à balayage) d'un échantillon de MIL-130 (Al) montrant des cristallites sous forme de baguette hexagonale.

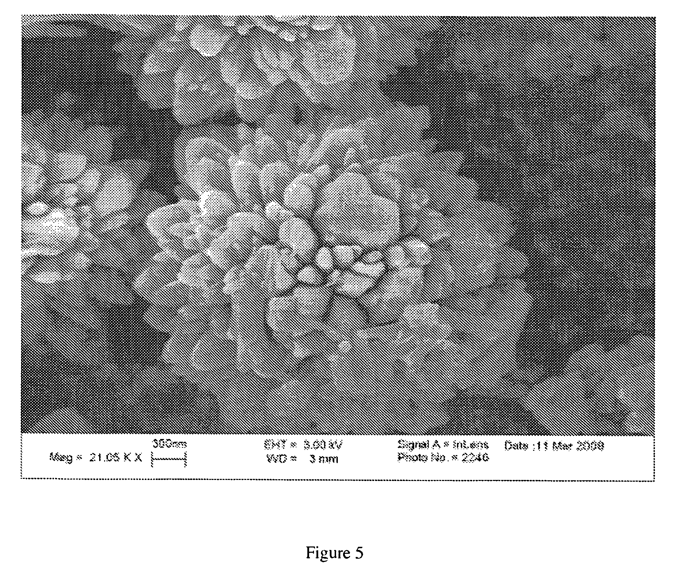

□ La figure 5 représente la photographie (microscopie électronique à balayage) d'un échantillon de MIL-130 (Al) montrant des cristallites sous forme d'agrégats de cristallites ovoides.

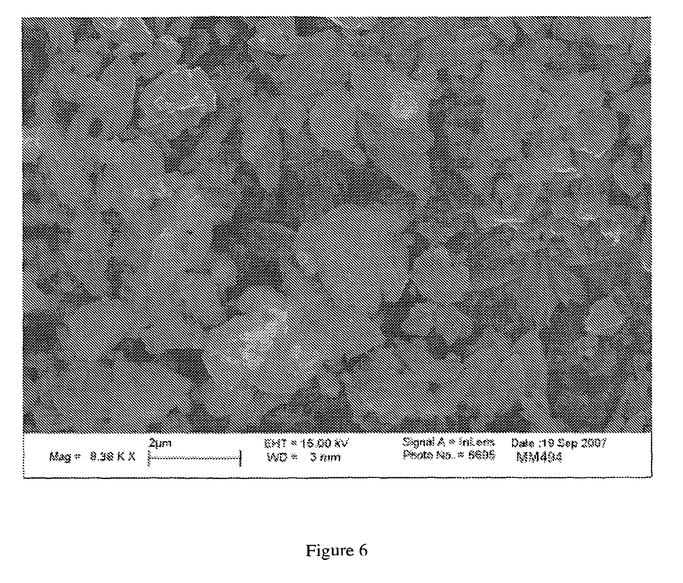

□ La figure 6 représente la photographie (microscopie électronique à balayage) d'un échantillon de MIL-130 (Al) montrant des cristallites sous forme de plaquettes ovoides.

### EXEMPLES

Les exemples qui suivent décrivent la synthèse de solides constitués de réseaux métal-organiques (MOF) d'azocarboxylate aromatique d'aluminium microporeux (notés MIL-n) obtenus avec des ligands de type azobenzène carboxylate et plus particulièrement avec le ligand 4,4'-azodibenzènedicarboxylate. Les composés (notés MIL-n) synthétisés ont ensuite été caractérisés par diffraction des rayons X sur poudre, analyse thermogravimétrique, microscopie électronique à balayage (MEB) et leurs surfaces spécifiques ont été mesurées par la méthode BET.

Les diagrammes de diffraction ont été enregistrés à l'aide d'un diffractomètre (Siemens D5000) en géométrie Bragg-Brentano en réflexion sur un domaine angulaire en 2theta de 2 à 40° avec un pas et un temps de comptage de 0,02° et de 1 seconde, respectivement (radiation CuK_{□1.2}). L'analyse thermogravimétrique (TA Instrument 2050) a été réalisé à partir d'un échantillon de 5 ou 20 mg chauffé sur une balance de 20 à 600°C sous flux d'oxygène avec une vitesse de chauffage de 3°C.min⁻¹. Pour l'examen au microscope électronique à balayage (LEO 1530), les échantillons ont été métallisé avec du carbone puis placé dans une chambre sous vide sous le faisceau d'électrons. Les surfaces spécifiques ont été mésurées sur un appareil Micromeritics ASAP2010 à partir de 100 mg d'échantillons qui ont été préalablement chauffé à 200°C sous vide pendant 12 heures.

### Exemple 1 : Préparation de MIL-130 (Al)

Le composé MIL-130 (Al) est obtenu à partir d'un mélange de 3,6 g de nitrate d'aluminium (Al(NO₃)₃·9H₂O), 1,2 g d'acide 4,4'-azodibenzènedicarboxylique et 70 ml de DMF (N,N'-diméthylformamide) placés dans une cellule en téflon d'un volume de 125 ml puis insérée dans un autoclave en acier de marque commerciale Parr (marque déposée). La réaction a lieu à 100°C pendant 7 jours dans un four. 2 g de MIL-130 (Al) est obtenu. Le produit est activé par chauffage à 200°C pendant une nuit.

Une seconde préparation peut être réalisée à partir d'un mélange de 0,36 g de perchlorate d'aluminium (Al(ClO₄)₃·9H₂O), 0,1 g d'acide 4,4'-azodibenzènedicarboxylique, 5 ml de DMF (N,N'-diméthylformamide) placés dans une cellule en téflon d'un volume de 23 ml puis un autoclave en acier de type Parr (nom de commerce). La réaction a lieu à 100°C pendant 7 jours dans un four. 0,11 g de MIL-130 (Al) est obtenu.

Une troisième préparation peut être réalisée à partir d'un mélange de 0,19 g de chlorure d'aluminium hexahydraté (Al(Cl)₃-6H₂O), 0,1 g d'acide 4,4'-azodibenzènedicarboxylique, 5 ml de DMF (N,N'-diméthylformamide) placés dans une cellule en téflon d'un volume de 23 ml puis un autoclave en acier de marque commerciale Parr (marque déposée). La réaction a lieu à 100°C pendant 7 jours dans un four. 0,07 g de MIL-130 (Al) est obtenu.

Une quatrième préparation peut être réalisée à partir d'un mélange de 0,1 g de chlorure d'aluminium anhydre (Al(Cl)₃), 0,1 g d'acide 4,4'-azodibenzènedicarboxylique, 5 ml de DMF (N,N'-diméthylformamide) placés dans une cellule en téflon d'un volume de 23 ml puis un autoclave en acier de marque commerciale Parr (marque déposée). La réaction a lieu à 100°C pendant 7 jours dans un four. 0,07 g de MIL-130 (Al) est obtenu.

Une cinquième préparation peut être réalisée à partir d'un mélange de 0,1 g de chlorure d'aluminium anhydre (Al(Cl)₃), 0,1 g d'acide 4,4'-azodibenzènedicarboxylique, 5 ml de DMF (N,N'-diméthylformamide) placés dans une cellule en téflon d'un volume de 23 ml puis un autoclave en acier de marque commerciale Parr (marque déposée). La réaction a lieu à 100°C pendant 4 heures dans un four. 0,07 g de MIL-130 (Al) est obtenu.

L'examen de ces solides (par exemple, quatrième préparation) au microscope électronique révèle la présence de petits cristaux en forme de baguettes hexagonales avec une taille moyenne de 0,2 à 0,8 micron (figure 4), d'agrégats de cristallites ovoides (figure 5) provenant de la deuxième préparation ou encore de plaquettes ovoides (figure 6) provenant de la première préparation.

Les pics de Bragg du diagramme de poudre peuvent correspondre à une maille hexagonale avec les paramètres a = b = 33,264(1) Å et c = 4,681(1) Å, V = 4417,5(1) Å³. Le diffractogramme RX est présenté en figure 1.

La surface spécifique BET est de 1770 m²/g et la surface Langmuir est de 3190 m²/g. L'isotherme d'adsorption présente une marche pour p/p₀ = 0,15, caractéristique de cavités ou tunnels mésoporeux (figure 2). L'analyse thermogravimétrique indique que le matériau MIL-100 (Al) est stable jusqu'à 420°C (figure 3).

La combinaison de ces différentes analyses de caractérisation (DRX, MEB montre bien qu'il s'agit d'un matériau très bien identifié avec une très grande pureté cristalline. A la suite de l'observation DRX, on peut definir un composé, pour lequel la phase MIL-130(Al) est majoritaire jusqu'à 95% (en masse) au moins.

### Listes des références

[1] Reticular Synthesis and the Design of New Materials, O.M. Yaghi, M. O'Keeffe, N.W. Ockwig, H.K. Chae, M. Eddaoudi and J. Kim, Nature, 423, 705-14 (2003).
[2] Functional Porous Coordination Polymers, S. Kitagawa, R. Kitaura and S.-I. Noro, Angew. Chem. Int. Ed., 43, 2334-75 (2004).
[3] Hybrid Porous Solids: Past, Present, Future, G. Férey, Chem. Soc. Rev., 37, 191-214 (2008).
[4] Hydrogen Storage in Microporous Metal-Organic Frameworks, N.L. Rosi, J. Eckert, M. Eddaoudi, D.T. Vodak, J. Kim, M. O'Keeffe and O.M. Yaghi, Science, 300,1127-9 (2003).
[5] Hydrogen Adsorption in the Nanoporous Metal-benzenedicarboxylate M(OH)(O2C-C6H4-CO2) (M = Al3+, Cr3+), MIL-53, G. Férey, M. Latroche, C. Serre, F. Millange, T. Loiseau and A. Percheron-Guégan, Chem. Commun., 2976-7 (2003).
[6] Hydrogen Storage in the Giant-Pore Metal-Organic Frameworks MIL-100 and MIL-101, M. Latroche, S. Surblé, C. Serre, C. Mellot-Draznieks, P.L. Llewellyn, J.-H. Lee, J.-S. Chang, S.H. Jhung and G. Férey, Angew. Chem. Int. Ed., 45, 8227 (2006).
[7] Systematic Design of Pore Size and Functionality in Isoreticular MOFs and their Application in Methane Storage, M. Eddaoudi, J. Kim, N. Rosi, D. Vodak, J. Wachter, M. O'Keeffe and O.M. Yaghi, Nature, 295, 469-72 (2002).
[8] Different Adsorption Behaviors of Methane and Carbon Dioxide in the Isotypic Nanoporous Metal Terephthalates MIL-53 and MIL-47, S. Bourrelly, P. L. Llewellyn, C. Serre, F. Millange, T. Loiseau and G. Férey, J. Am. Chem. Soc., 127, 13519-21 (2005).
[9] Metal-Organic Frameworks as Efficient Materials for Drug Delivery, P. Horcajada, C. Serre, M. Vallet-Regi, M. Sebban, F. Taulelle and G. Férey, Angew. Chem. Int. Ed., 45, 5974 (2006).
[10] High Gas Adsorption in a Microporous Metal-Organic Framework with Open-Framework, O.M. Yaghi, WO 2006/110740 (2006).
[11] Isoreticular Metal-Organic Framework Process for Forming the Same and Systematic Design of Pore size and Functionality therein, with Application for Gas Storage, WO 02/088148 (2002).
[12] Metal-Organic Frameworks - Prospective Industrial Applications, U. Müller, M. Schubert, F. Teich, H. Pütter, K. Schierle-Arndt and J. Pastré, J. Mater. Chem., 16, 626-36 (2006).
[13] Shaped Bodies Containing Metal-Organic Frameworks, M. Hesse, U. Müller, O.M. Yaghi, WO 2006/050898 (2006).
[14] A Rationale for the Large Breathing of the Porous Aluminum Terephthalate (MIL-53) Upon Hydration, T. Loiseau, C. Serre, C. Huguenard, G. Fink, F. Taulelle, M. Henry, T. Bataille and G. Férey, Chem. Eur. J., 10, 1373-82 (2004).
[15] Hydrothermal Synthesis and Crystal Structure of a New Three-Dimensional Aluminum-Organic Framework MIL-69 with 2,6-Naphthalenedicarboxylate (ndc), Al(OH)(ndc)□H2O, T. Loiseau, C. Mellot-Draznieks, H. Muguerra, G. Férey, M. Haouas and F. Taulelle, C. R. Chimie, Special Issue on Crystalline and Organized Porous Solids, 8, 765-72 (2005).
[16] MIL-96, a Porous Aluminum Trimesate 3D Structure Constructed from a Hexagonal Network of 18-Membered Rings and µ3-Oxo-Centered Trinuclear Units, T. Loiseau, L. Lecroq, C. Volkringer, J. Marrot, G. Férey, M. Haouas, F. Taulelle, S. Bourrelly, P. L. Llewellyn and M. Latroche, J. Am. Chem. Soc., 128, 10223-30 (2006).
[17] A Microdiffraction Set-up for Nanoporous Metal-Organic-Framework-Type Solids, C. Volkringer, D. Popov, T. Loiseau, N. Guillou, G. Férey, M. Haouas, F. Taulelle, C. Mellot-Draznieks, M. Burghammer and C. Riekel, Nature Materials, 6, 760-4 (2007).
[18] Design and Synthesis of an Exceptionally Stable and Highly Porous Metal-Organic Framework. H. Li, M. Eddaoudi, M. O'Keeffe, O.M. Yaghi, Nature, 402, 276-9 (1999).
[19] A Chemically Functionalizable Nanoporous Material [Cu3(TMA)2(H2O)3]n, S.S.-Y. Chui, S.M.-F. Lo, J.P.H. Charmant, A. Guy Orpen and I.D. Williams, Science, 283,1148 (1999).
[20] Method for Producing Organometallic Framework Materials Containing Main Group Metal Ions, M. Schubert, U. Müller, M. Tonigold, R. Ruetz, WO 2007/023134 (2007).
[21] Mesoporous Metal-Organic Framework, M. Schubert, U. Müller, H. Mattenheimer, M. Tonigold, WO 2007/023119 (2007).
[22] Organometallic Aluminum Fumarate Backbone Material, C. Kiener, U. Müller, M. Schubert, WO 2007/118841 (2007).
[23] Dotierte Metallorganische Gerüstmaterialien, M. Schubert, U. Müller, R. Ruetz, S. Hatscher, DE 10 2005 053 430 (2005).
[24] MOF-Compounds as Gas Adsorbers, K.O. Kongshaug, R.H. Heyn, H. Fjellvag, R. Bloom, WO 2007/128994 (2007).
[25] « How hydration drastically improves adsorption selectivity for CO2 over CH4 in the flexible Chromium terephthalate MIL-53 », P.L. Llewellyn, S. Bourrelly, C. Serre, Y. Filinchuk and G. Férey, Angew. Chem. Int. Ed. 45 7751-4 (2006).
[26] « Synthesis and catalysis properties of MIL-100(Fe), an iron(III) carboxylate with large pores » P. Horcajada, S. Surblé, C. Serre, D.-Y. Hong, Y.-K. Seo, J.-S Chang, J.-M. Grenèche, I. Margiolaki and G. Férey, Chem. Commun. 2820-2 (2007) ; « Catalytic properties of MIL-101 » A. Henschel, K. Gedrich, R. Kraehnert and S. Kaskel, Chem. Commun. 4192-4 (2008) ; « Amine grafting on coordinatively unsaturated metal centers of MOFs: consequences for catalytis and metal encapsulation » Y.K. Hwang, D.-Y. Hong, J.-S. Chang, S.H. Jhung, Y.-K. Seo, J. Kim, A. Vimont, M. Daturi, C. Serre and G. Férey, Angew. Chem. Int. Ed. 47 4144-8 (2008).
[27] A comparison of the H2 sorption capacities of isostructural Metal-Organic Frameworks with and without accessible metal sites: [{Zn2(abtc)(dmf)2}3 and [{Cu(abtc)(dmf)2}3] versus [{Cu2(abtc)}3],» Y.-G. Lee, H.R. Moon, Y.E. Cheon, and M.P. Suh, Angew. Chem. Int. Ed. 47, 7741-5 (2008).

## Revendications

1. Procédé de préparation d'un solide MOF d'un azocarboxylate aromatique d'aluminium poreux et cristallisé, comprenant au moins les étapes suivantes :
(i) on mélange dans un solvant organique non aqueux :
- au moins un précurseur inorganique métallique se présentant sous la forme de métal Al, d'un sel de métal Al³⁺ ou d'un complexe de coordination comprenant l'ion métallique Al³⁺ ; et
- au moins un précurseur organique du ligand L, L étant un ligand azodi-, azotri-, azotétra-carboxylate aromatique de formule R⁰R¹N₂(COO⁻) q où R⁰ et R¹ représentent, indépendemment l'un de l'autre,
• un radical aryle mono- ou poly-cyclique, fusionné ou non, comprenant de 6 à 50 atomes de carbone,
• un radical hétéroaryle mono- ou poly-cyclique, fusionné ou non, comprenant de 4 à 50 atomes de carbone,
le radical R⁰ étant éventuellement substitué par un ou plusieurs groupes indépendamment choisis dans le groupe comprenant C₁₋₁₀alkyle, C₂₋₁₀alcène, C₂₋₁₀alcyne, C₃₋₁₀cycloalkyle, C₁₋₁₀hétéroalkyle, C₁₋₁₀haloalkyle, C₆₋₁₀aryle, C₃₋₂₀hétérocyclique, C₁₋₁₀alkylC₆₋₁₀aryle, C₁₋₁₀alkylC₅₋₁₀hétéroaryle, F, Cl, Br, I, -NO₂, -CN, -CF₃, -CH₂CF₃, -OH, -CH₂OH, -CH₂CH₂OH, -NH₂, -CH₂NH₂, -NHCHO, -COOH, -CONH₂, -SO₃H, -PO₃H₂,
• q = 2 à 4;
(ii) on chauffe le mélange obtenu en (i) à une température d'au moins 50°C de manière à obtenir ledit solide.

2. Procédé selon la revendication 1, dans lequel le solvant organique non aqueux est le DMF, le DEF, le dioxane, le méthanol, l'éthanol, le DMSO.

3. Procédé selon l'une des revendications 1 ou 2, dans lequel dans l'étape (i) le précurseur inorganique métallique et le précurseur organique du ligand L sont mélangés dans un rapport molaire compris entre 1 et 5.

4. Procédé selon l'une quelconque des revendications 1 à 3, dans lequel le précurseur inorganique métallique se présente sous forme d'un sel de métal Al³⁺.

5. Procédé selon l'une quelconque des revendications 1 à 4, dans lequel L est un azodi- ou azotétra-carboxylique aromatique, choisi dans le groupe comprenant :
C₁₂H₈N₂(CO₂⁻)₂ (4,4'-azobenzène dicarboxylate),
C₁₂H₆Cl₂N₂(CO₂⁻)₂ (dichloro-4,4'-azobenzène dicarboxylate),
C₁₂H₆N₂(CO₂⁻)₄ (3,3',5,5'-azobenzène tétracarboxylate),
C₁₂H₆N₂(OH)₂(CO₂⁻)₂ (dihydroxo-4,4'-azobenzène dicarboxylate).

6. Procédé selon l'une quelconque des revendications 1 à 5, dans lequel dans l'étape (ii) on chauffe le mélange à une température allant de 50°C à 150 °C.

7. Procédé selon l'une quelconque des revendications 1 à 6, dans lequel dans l'étape (ii) on chauffe le mélange pendant 1 à 10 jours.

8. Procédé selon l'une quelconque des revendications 1 à 7, dans lequel l'étape (ii) est réalisée à une pression autogène supérieure à 10⁵ Pa.

9. Procédé selon l'une quelconque des revendications 1 à 8, comprenant, en outre, une étape d'activation (iii) dans laquelle le solide obtenu en (ii) est chauffé à une température de 100 à 300°C.

10. Procédé selon la revendication 9, dans lequel l'étape d'activation (iii) se fait dans un mélange de solvants choisis dans le groupe comprenant le DMF, le DEF, le méthanol, l'éthanol, le DMSO ou l'eau.

11. Procédé selon l'une des revendication 9 ou 10, comprenant une étape d'activation (iii) dans laquelle le solide obtenu en (ii) est chauffé pendant 1 à 48 heures.

12. Solide MOF d'un azocarboxylate aromatique d'aluminium poreux et cristallisé susceptible d'être obtenu par le procédé selon l'une quelconque des revendication 1 à 11, comprenant une succession tridimensionnelle de motifs de formule (I):
AlₘOₖXₗLₚ (I)
dans laquelle :
□ Al représente l'ion métallique Al³⁺ ;
□ m est 1 à 15 ;
□ k est 0 à 15;
□ l est 0 à 10;
□ p est 1 à 10 ;
m, k, l est p sont choisis de façon à respecter la neutralité des charges dudit motif ;
□ X est un anion choisi dans le groupe comprenant OH⁻, Cl⁻, F⁻, I⁻, Br⁻, SO₄²⁻, NO₃⁻, ClO₄⁻, PF₆⁻, BF₃⁻, R²-(COO⁻)ₙ, R²-(SO₃⁻)ₙ, R²-(PO₃⁻)ₙ, où R² est un hydrogène, un alkyle en C₁ à C₁₂, linéaire ou ramifié, éventuellement substitué, n = 1 à 4 ;
□ L est un ligand tel que défini dans la revendication 1.

13. Solide selon la revendication 12, dans lequel l'anion X est choisi dans le groupe comprenant OH⁻, Cl⁻, F⁻, ClO₄⁻.

14. Solide selon l'une des revendications 12 ou 13, comprenant un pourcentage massique d'Al de 5 à 50%.

15. Solide selon l'une quelconque des revendications 12 à 14 présentant une surface spécifique BET allant de 100 à 3000 m²/g.

16. Solide selon l'une quelconque des revendications 12 à 15 présentant une surface spécifique Langmuir allant de 150 à 3500 m²/g.

17. Solide selon l'une quelconque des revendications 12 à 16 dans lequel le diamètre de pores dudit solide est de 0,2 à 6 nm.

18. Solide selon l'une quelconque des revendications 12 à 17 dans lequel ledit solide présente un volume poreux de à 0,3 à 4 cm³/g.

19. Solide selon l'une quelconque des revendications 12 à 18 dans lequel ledit solide présente une stabilité thermique jusqu'à une température de 500°C.

20. Solide selon l'une quelconque des revendications 12 à 19 dans lequel ledit solide est sous forme de cristallites avec une longueur qui varie de 0,05 µm à 20 µm.

21. Utilisation d'un solide selon l'une quelconque des revendications 12 à 20 pour le stockage des molécules liquides ou gazeuses.

22. Utilisation d'un solide selon l'une quelconque des revendications 12 à 20 pour la séparation sélective de gaz.

23. Utilisation d'un solide selon l'une quelconque des revendications 12 à 20 pour la catalyse.

## Patentansprüche

1. Verfahren zur Herstellung eines MOF-Feststoffs aus porösem und kristallisiertem aromatischem Aluminiumazocarboxylat, das mindestens die folgenden Schritte umfasst:
(i) man mischt in einem nichtwässrigen organischen Lösungsmittel
- mindestens eine anorganische Metallvorstufe, die in Form von Al-Metall, einem Al³⁺-Metallsalz oder einem das Al³⁺-Metallion umfassenden Koordinationskomplex vorliegt; und
- mindestens eine organische Vorstufe des Liganden L, wobei es sich bei L um einen aromatischen Azodi-, Azotri- oder Azotetracarboxylatliganden der Formel R⁰R¹N₂(COO⁻)q handelt, wobei R⁰ und R¹ unabhängig voneinander für
• einen mono- oder polycyclischen, gegebenenfalls kondensierten Arylrest mit 6 bis 50 Kohlenstoffatomen oder
• einen mono- oder polycyclischen, gegebenenfalls kondensierten Heteroarylrest mit 4 bis 50 Kohlenstoffatomen
stehen, wobei der Rest R⁰ gegebenenfalls durch eine oder mehrere Gruppen, die unabhängig aus der Gruppe umfassend C₁₋₁₀-Alkyl, C₂₋₁₀-Alken, C₂₋₁₀-Alkin, C₃₋₁₀-Cycloalkyl, C₁₋₁₀-Heteroalkyl, C₁₋₁₀-Halogenalkyl, C₆₋₁₀-Aryl, C₃₋₂₀-Heterocyclyl, C₁₋₁₀-Alkyl-C₆₋₁₀-aryl, C₁₋₁₀-Alkyl-C5-1o-heteroaryl, F, Cl, Br, I, -NO₂, -CN, -CF₃, -CH₂CF₃, -OH, -CH₂OH, -CH₂CH₂OH, -NH₂, -CH₂NH₂, -NHCHO, -COOH, -CONH₂, -SO₃H, -PO₃H₂ ausgewählt sind, substituiert ist,
• q = 2 bis 4;
(ii) man erhitzt die in (i) erhaltene Mischung auf eine Temperatur von mindestens 50°C, wodurch man den Feststoff erhält.

2. Verfahren nach Anspruch 1, bei dem es sich bei dem nichtwässrigen organischen Lösungsmittel um DMF, DEF, Dioxan, Methanol, Ethanol, DMSO handelt.

3. Verfahren nach einem der Ansprüche 1 oder 2, bei dem man in Schritt (i) die anorganische Metallvorstufe und die organische Vorstufe des Liganden L in einem Molverhältnis zwischen 1 und 5 mischt.

4. Verfahren nach einem der Ansprüche 1 bis 3, bei dem die anorganische Metallvorstufe in Form eines Al³⁺-Metallsalzes vorliegt.

5. Verfahren nach einem der Ansprüche 1 bis 4, bei dem es sich bei L um einen aromatischen Azodi- oder Azotetracarboxylatliganden aus der Gruppe umfassend:
C₁₂H₈N₂(CO₂⁻)₂ (4,4'-Azobenzoldicarboxylat),
C₁₂H₆Cl₂N₂(CO₂⁻) ₂ (Dichlor-4,4'-azobenzoldicarboxylat),
C₁₂H₆N₂(CO₂⁻)₄ (3,3',5,5'-Azobenzoltetracarboxylat),
C₁₂H₆N₂(OH)₂(CO₂)₂ (Dihydroxo-4,4'-azobenzoldicarboxylat)
handelt.

6. Verfahren nach einem der Ansprüche 1 bis 5, bei dem man in Schritt (ii) die Mischung auf eine Temperatur im Bereich von 50°C bis 150°C erhitzt.

7. Verfahren nach einem der Ansprüche 1 bis 6, bei dem man in Schritt (ii) die Mischung 1 bis 10 Tage erhitzt.

8. Verfahren nach einem der Ansprüche 1 bis 7, bei dem man Schritt (ii) bei einem autogenen Druck von mehr als 10⁵ Pa durchführt.

9. Verfahren nach einem der Ansprüche 1 bis 8, das außerdem einen Aktivierungsschritt (iii) umfasst, bei dem man den in (ii) erhaltenen Feststoff auf eine Temperatur von 100 bis 300°C erhitzt.

10. Verfahren nach Anspruch 9, bei dem der Aktivierungsschritt (iii) in einer Mischung von Lösungsmitteln aus der Gruppe umfassend DMF, DEF, Methanol, Ethanol, DMSO oder Wasser erfolgt.

11. Verfahren nach einem der Ansprüche 9 oder 10, das einen Aktivierungsschritt (iii) umfasst, bei dem man den in (ii) erhaltenen Feststoff 1 bis 48 Stunden erhitzt.

12. MOF-Feststoff aus porösem und kristallisiertem aromatischem Aluminiumazocarboxylat, der nach dem Verfahren nach einem der Ansprüche 1 bis 11 erhältlich ist und eine dreidimensionale Abfolge von Einheiten der Formel (I) umfasst:
AlₘOₖXₗLₚ (I)
worin:
□ Al für ein Al³⁺-Metallion steht;
□ m 1 bis 15 ist;
□ k 0 bis 15 ist;
□ l 0 bis 10 ist;
□ p 1 bis 10 ist;
m, k, l und p so gewählt sind, dass die Ladungsneutralität der Einheit gewahrt bleibt;
□ X für ein Anion aus der Gruppe umfassend OH⁻, Cl⁻, F⁻, I⁻, Br⁻, SO₄²⁻, NO₃⁻, ClO₄⁻, PF₆⁻, BF₃⁻, R²-(COO)ₙ⁻, R²-(SO₃⁻)ₙ, R²-(PO₃⁻)ₙ steht, wobei R² für Wasserstoff oder ein gegebenenfalls substituiertes lineares oder verzweigtes C₁- bis C₁₂-Alkyl steht und n = 1 bis 4;
□ L ein Ligand gemäß der in Anspruch 1 angegebenen Definition ist.

13. Feststoff nach Anspruch 12, wobei das Anion X aus der Gruppe bestehend aus OH⁻, Cl⁻, F⁻, ClO₄⁻ ausgewählt ist.

14. Verfahren nach einem der Ansprüche 12 oder 13 mit einem Massenprozentanteil von Al von 5 bis 50%.

15. Feststoff nach einem der Ansprüche 12 bis 14 mit einer spezifischen BET-Oberfläche im Bereich von 100 bis 3000 m²/g.

16. Feststoff nach einem der Ansprüche 12 bis 15 mit einer spezifischen Langmuir-Oberfläche im Bereich von 150 bis 3500 m²/g.

17. Feststoff nach einem der Ansprüche 12 bis 16, wobei der Porendurchmesser des Feststoffs 0,2 bis 6 nm beträgt.

18. Feststoff nach einem der Ansprüche 12 bis 17, bei dem der Feststoff ein Porenvolumen von 0,3 bis 4 cm³/g aufweist.

19. Feststoff nach einem der Ansprüche 12 bis 18, bei dem der Feststoff eine Wärmestabilität bis zu einer Temperatur von 500°C aufweist.

20. Feststoff nach einem der Ansprüche 12 bis 19, wobei der Feststoff in Form von Kristalliten mit einer Länge, die von 0,05 µm bis 20 µm variiert, vorliegt.

21. Verwendung eines Feststoffs nach einem der Ansprüche 12 bis 20 zur Speicherung von flüssigen oder gasförmigen Molekülen.

22. Verwendung eines Feststoffs nach einem der Ansprüche 12 bis 20 zur selektiven Trennung von Gasen.

23. Verwendung eines Feststoffs nach einem der Ansprüche 12 bis 20 zur Katalyse.

## Claims

1. Process for preparing a porous and crystallized aluminum aromatic azocarboxylate MOF solid, comprising at least the following steps of:
(i) mixing in a nonaqueous organic solvent:
- at least a metal inorganic precursor in the form of Al metal, a Al³⁺metal salt or a coordination complex comprising a Al³⁺metal ion; and
- at least an organic precursor of a ligand L, L being an aromatic azodi-, azotri-, azotetracarboxylate ligand of formula R⁰R¹N₂ (COO⁻)_{q} where R⁰ and R¹ independently from each other represent,
• a mono- or poly-cyclic, fused or non fused, aryl radical, comprising 6 to 50 carbon atoms,
• a mono- or poly-cyclic, fused or non fused, heteroaryl radical comprising 4 to 50 carbon atoms,
the R⁰ radical being optionally substituted with one or more groups independently selected from the group comprising C₁₋₁₀ alkyl, C₂₋₁₀alkene, C₂₋₁₀alkyne, C₃₋₁₀cycloalkyl, C₁₋₁₀heteroalkyl, C₆₋₁₀aryl, C₃₋₂₀heterocyclic, C₁₋₁₀haloalkyle, C₁₋₁₀alkyl C₆₋₁₀aryl, C₁₋₁₀alkyl C₅₋₁₀ heteroaryl, F, Cl, Br, I, -NO₂, -CN, -CF₃, -CH₂CF₃, -OH, -CH₂OH, -CH₂CH₂OH, - NH₂, -CH₂NH₂, - NHCHO, -COOH, -CONH₂, -SO₃H, -PO₃H₂,
• q=2 to 4;
(ii) heating the mixture obtained in (i) at a temperature of at least 50° C so as to obtain said solid.

2. Process according to claim 1, wherein the non aqueous organic solvent is DMF, DEF, dioxane, methanol, ethanol, DMSO.

3. Process according to any of claims 1 or 2, wherein in step (i) the metal inorganic precursor and the organic precursor of the ligand L are mixed in a molar ratio comprised between 1 to 5.

4. Process according to any of claims 1 to 3, wherein the metal inorganic precursor is in the form of a Al³⁺metal salt.

5. Process according to any one of claims 1 to 4, wherein L is an aromatic azodi- or azotetra-carboxylic, selected from the group comprising:
C₁₂H₈N₂ (CO₂ ⁻)₂ (azobenzene-4,4'-dicarboxylate),
C₁₂H₆Cl₂N₂(CO₂⁻)₂(dichloro-azobenzene-4,4'-dicarboxylate),
C₁₂H₆N₂(CO₂⁻)₄(azobenzene-3,3',5,5'-tetracarboxylate),
C₁₂H₆N₂(OH)₂(CO₂⁻)₂(dihydroxy-azobenzene-4,4'-dicarboxylate).

6. Process according to any one of claims 1 to 5, wherein in step (ii) the mixture is heated at a temperature of 50° C to 150° C.

7. Process according to any one of claims 1 to 6, wherein in step (ii) the mixture is heated for 1 to 10 days.

8. Process according to any one of claims 1 to 7, wherein step (ii) is carried out at an autogenous pressure higher than 10⁵ Pa.

9. Process according to any one of claims 1 to 8, further comprising an activation step (iii) in which the solid obtained in (ii) is heated at a temperature of 100 to 300° C.

10. Process according to claim 9, wherein the activation step (iii) is carried out in a mixture of solvents selected from the group comprising DMF, DEF, methanol, ethanol, DMSO or water.

11. Process according to any one of claims 9 or 10, comprising an activation step (iii) in which the solid obtained in (ii) is heated for 1 to 48 hours.

12. Crystallized and porous aluminum aromatic azocarboxylate MOF solid obtainable by the process according to any one of claims 1 to 11, comprising a three-dimensional succession of repeat units of formula (I):
AlₘOₖXₗLₚ (I)
in which:
• Al represents the Al³⁺metal ion;
• m is 1 to 15;
• k is 0 to 15;
• l is 0 to 10;
• p is 1 to 10;
• m, k, l and p are selected so as to respect the neutrality of the charges of said repeat unit;
• X is an anion selected from the group comprising OH⁻, Cl⁻, F⁻, I⁻, Br⁻, SO₄²⁻, NO₃⁻, ClO₄⁻, PF₆⁻, BF₃⁻, R²-(COO⁻)ₙ, R²-(SO₃⁻)ₙ, R²-(PO₃⁻)ₙ, where R² is hydrogen, a linear or branched optionally substituted C₁ to C₁₂ alkyl, n=1 to 4;
• L is a ligand as defined in claim 1.

13. Solid according to claim 12, wherein the anion X is selected from the group comprising OH⁻, Cl⁻, F⁻, ClO₄⁻.

14. Solid according to any one of claims 12 or 13, comprising a mass percentage of Al from 5 to 50%.

15. Solid according to any one of claims 12 to 14 having a BET surface area from 100 to 3000 m²/g.

16. Solid according to any one of claims 12 to 15 having a specific Langmuir surface area from 150 to 3500 m²/g.

17. Solid according to any one of claims 12 to 16 wherein the pore diameter of said solid is from 0.2 to 6 nm.

18. Solid according to any one of claims 12 to 17 wherein said solid has a porous volume of 0.3 to 4 cm³/g.

19. Solid according to any one of claims 12 to 18 wherein said solid is thermally stable up to a temperature of 500° C.

20. Solid according to any one of claims 12 to 19 wherein said solid is in the form of crystallites the length of which varies from 0.05 µm to 20 µm.

21. Use of a solid according to any one of claims 12 to 20 for storing liquid or gas molecules.

22. Use of a solid according to any one of claims 12 to 20 for the selective separation of gas.

23. Use of a solid according to any one of claims 12 to 20 for catalysis.
